(19) Europäisches Patentamt

European Patent Office

Office européen des brevets

(11) **EP 4 279 745 B1**

(12) **EUROPÄISCHE PATENTSCHRIFT**

(45) Veröffentlichungstag und Bekanntmachung des Hinweises auf die Patenterteilung:
**22.01.2025  Patentblatt 2025/04**

(21) Anmeldenummer: **23163374.4**

(22) Anmeldetag: **22.03.2023**

(51) Internationale Patentklassifikation (IPC):
**F04D 15/00** *(2006.01)*          **G01F 23/00** *(2022.01)*

(52) Gemeinsame Patentklassifikation (CPC):
**F04D 15/0088; F04D 15/0066; G01F 23/18;
G01F 23/185**

(54) **VERFAHREN ZUR BESTIMMUNG DER STATISCHEN FÖRDERHÖHE EINER PUMPE**

METHOD FOR DETERMINING THE STATIC HEAD OF A PUMP

PROCÉDÉ POUR DÉTERMINER L'ÉLÉVATION STATIQUE D'UNE POMPE

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorität: **18.05.2022  LU 502112**

(43) Veröffentlichungstag der Anmeldung:
**22.11.2023  Patentblatt 2023/47**

(73) Patentinhaber: **WILO SE
44263 Dortmund (DE)**

(72) Erfinder:
• **Fiedler, Jens Olav
44263 Dortmund (DE)**
• **Graurock, David
44263 Dortmund (DE)**
• **Nowak, Lukas
44263 Dortmund (DE)**

(74) Vertreter: **Cohausz Hannig Borkowski Wißgott
Patentanwaltskanzlei GbR
Schumannstraße 97-99
40237 Düsseldorf (DE)**

(56) Entgegenhaltungen:
**EP-A1- 2 354 556          EP-B1- 3 123 033
US-A1- 2014 136 000**

**Beschreibung**

Die Erfindung betrifft ein Verfahren zur Bestimmung der statischen Förderhöhe eines drehzahlgeregelten Kreiselpumpenaggregats in einem offenen hydraulischen System.

Wird eine Flüssigkeit von einem ersten Behälter in einen zweiten Behälter gepumpt, der gegenüber dem ersten Behälter höhergelegen ist, wird ein Teil des von der Kreiselpumpe aufgebrachten Drucks für die Überwindung des Höhenunterschieds zwischen den Behältern benötigt, genauer gesagt für den Höhenunterschied zwischen dem Pegelstand des ersten Behälters (saugseitiges Flüssigkeitsniveau) und dem Pegelstand des zweiten Behälters (saugseitiges Flüssigkeitsniveau). Dieser Höhenunterschied wird als geodätische Höhe bezeichnet. Bei geschlossenen hydraulischen Systemen wie z.B. Heiz- oder Kühlkreisläufen ist die geodätische Höhe null. Erst wenn der Höhenunterschied überwunden ist, d.h. der von der Pumpe aufgebrachte Differenzdruck $\Delta p$ einer Förderhöhe H (H = $\Delta p/(\rho \cdot g)$) entspricht, die die geodätische Höhe übersteigt, ist der Förderstrom größer null.

Eine solche geodätische Höhe gibt es beispielsweise auch im Abwasserbereich, wenn Abwasser aus einem Pumpensumpf über eine Druckleitung in eine höher gelegene Abwasserleitung der Kanalisation eingeleitet werden soll. In diesem Fall ist die geodätische Höhe $H_{geo}$ der Höhenunterschied zwischen dem Pegel im Pumpensumpf und der Höhe des Übergangs von der Druckleitung zur Abwasserleitung, wie dies beispielsweise in der deutschen Patentanmeldung DE 10 2014 006 828 A1 in Figur 1 gezeigt ist. Bei einer Bohrlochpumpe wäre die geodätische Höhe die Höhendifferenz vom Grundwasserspiegel bis zur Oberfläche.

Sind der erste und zweite Behälter geschlossen und besteht eine Druckdifferenz zwischen diesen, muss auch diese systembedingte Druckdifferenz von der Pumpe überwunden werden, damit sich ein Förderstrom größer null ergibt. Die Summe aus der geodätischen Höhe $H_{geo}$ und der systembedingten Druckdifferenz zwischen der Druck- und Saugseite der Pumpe (die auch bei ausgeschalteter Pumpe vorliegt) bildet die statische Förderhöhe $H_{static}$. Dies bringt die folgende Gleichung zum Ausdruck:

$$\text{(Gl. 1)} \qquad H_{static} = \frac{p_{out}-p_{in}}{\rho \cdot g} + H_{geo}$$

in der

| | |
|---|---|
| $H_{static}$ | die statische Förderhöhe |
| $p_{out}$ | der druckseitige Druck/ Druck im zweiten Behälter |
| $p_{in}$ | der saugseitige Druck/ Druck im ersten Behälter |
| $\rho$ | die Dichte der geförderten Flüssigkeit |
| g | die Schwerebeschleunigung ($9{,}81 m/s^2$) und |
| Hgeo | die geodätische Höhe ist. |

Die statische Förderhöhe $H_{static}$ ist folglich diejenige Förderhöhe H des Kreiselpumpenaggregats, die überwunden werden muss, um überhaupt einen Förderstrom Q zu erhalten. Da sie von zumindest einem änderbaren Pegelstand abhängt, ist die statische Förderhöhe $H_{static}$ ebenfalls veränderlich. So wird die statische Förderhöhe $H_{static}$ größer, wenn der Pegel des ersten Behälters sinkt. Eine statische Förderhöhe gibt es auch in Trinkwasserversorgungsnetzwerken, die bereits mit einem Versorgungsdruck des Wasserversorgers gespeist werden. Hier kommen Booster-Pumpen (Druckerhöhungsanlagen) zum Einsatz, um den Versorgungsdruck zu erhöhen und einen ausreichenden Fließdruck an den höchsten und am weitesten entfernten Zapfstellen zu gewährleisten. Aufgrund des Versorgungsdrucks wirkt die statische Höhe hier, abhängig vom Messort, zunächst negativ. Ein Trinkwasserversorgungssystem ist ebenfalls ein offenes hydraulisches System, weil es zum Wasserversorger hin geöffnet ist und die Zapfstellen zur Atmosphäre geöffnet werden können. Ferner ist hier nicht vorgesehen, dauerhaft Wasser in einem geschlossenen Kreislauf zirkulieren zu lassen.

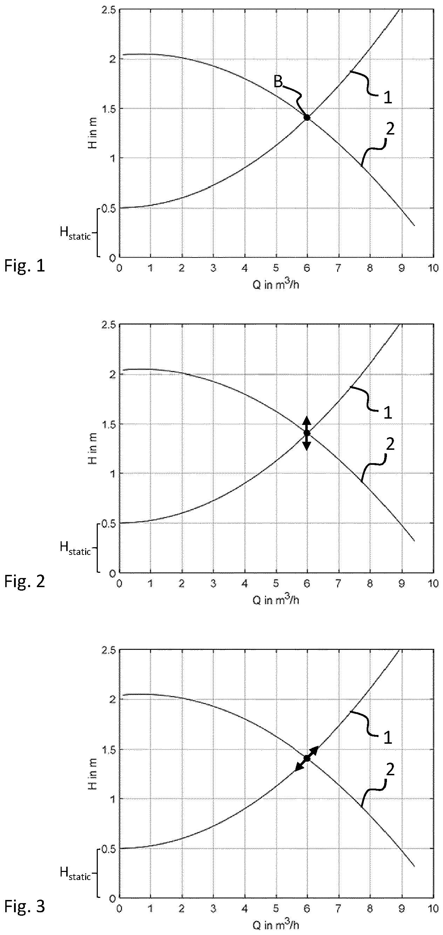

In der Darstellung der den Zusammenhang zwischen der Förderhöhe H und dem Förderstrom Q beschreibenden Anlagenkurve 1 des hydraulischen Systems im sogenannten HQ-Diagramm der Pumpe zeigt sich die statische Förderhöhe $H_{static}$ (Q=0) als Verschiebung der Rohrnetzparabel (Q>0, strömungsabhängige Förderhöhe) auf der Druckachse des HQ-Diagramm nach oben, wie dies in Figur 1 gezeigt ist, oder im Falle eines vordruckbeaufschlagten Trinkwasserversorgungsnetzwerks nach unten. Die Rohrnetzparabel verläuft hier jeweils nicht durch den Ursprung.

Moderne Regelungen von Kreiselpumpenaggregaten erfordern für einen möglichst effizienten Pumpenbetrieb die genaue Kenntnis des Arbeitspunktes B der Kreiselpumpe, der im Schnittpunkt der bei der aktuellen Betriebsdrehzahl vorliegenden Pumpenkurve 2 mit der Anlagenkennlinie 1 liegt. Zur Bestimmung des Arbeitspunktes B in offenen hydraulischen Systemen ist aber nicht nur die Steigung der Rohrnetzparabel, d.h. der infolge sich ändernder Ventilstellungen im System veränderliche Rohrleitungswiderstand notwendig, sondern auch die statische Förderhöhe $H_{static}$, weil sie einen Teil der Anlagenkurve 1 bildet. Es ist deshalb erforderlich, die statische Förderhöhe $H_{static}$ zu kennen. Dies ist unproblematisch, wenn sie aus Konstruktionsdaten der Anlage entnommen werden kann. Anderenfalls muss sie bestimmt werden.

Aus der europäischen Patentanmeldung EP 1 072 795 A1 ist bekannt, die gesamte Anlagenkurve abzufahren, indem die Drehzahl verändert und dabei der Förderstrom, die Förderhöhe und/ oder die Leistung messtechnisch ermittelt wird. Durch dieses Abfahren wird auch die statische Förderhöhe erkannt. Nachteilig ist hierbei die Notwendigkeit von Sensoren. Außerdem erfolgt die Bestimmung der Anlagenkurve nicht im laufenden Normalbetrieb, sondern in einem davon separaten Untersuchungsprozess, bei dem der Normalbetrieb verlassen bzw. ausgesetzt ist. Zur Bestimmung der statischen Förderhöhe wird folglich der für einen Normalbetrieb vorgesehene Arbeitspunkt des Kreiselpumpenaggregats verlassen.

Das europäische Patent EP 2 610 693 B1 beschreibt ein Verfahren zur Optimierung der Energieeffizienz eines Pumpensystems, das eine Systemidentifizierungsphase umfasst, bei der auch die sich ändernde statische Förderhöhe ermittelt wird. Hierzu wird das Pumpensystem an die beiden Grenzfälle maximaler und minimaler Pegelstand herangefahren, um die minimale und maximale statische Förderhöhe zu ermitteln. Die Bestimmung der Anlagenkurve erfolgt also auch hier nicht im laufenden Normalbetrieb, sondern in einer diesem vorgelagerten Systemidentifizierungsphase. Zur Bestimmung der statischen Förderhöhe wird der Arbeitspunkt des Kreiselpumpenaggregats ebenfalls erheblich geändert.

Weitere, für die Erfindung relevante Dokumente aus dem Stand der Technik sind US 2014/136000 A1 und EP 2 354 556 A1.

Aufgabe der vorliegenden Erfindung ist es, die genannten Nachteile zu überwinden und ein Verfahren sowie ein dieses ausführende Kreiselpumpenaggregat bereitzustellen, bei dem die Bestimmung der statischen Förderhöhe ohne Beeinträchtigung des laufenden Betriebs der Kreiselpumpe kontinuierlich im aktuellen Arbeitspunkt erfolgt, wobei insbesondere auf Sensoren für den Förderstrom und die Förderhöhe verzichtet werden soll.

Diese Aufgabe wird durch ein Verfahren mit den Merkmalen des Anspruchs 1 und eine Kreiselpumpe nach Anspruch 12 gelöst. Vorteilhafte Weiterbildungen sind in den Unteransprüchen angegeben und werden nachfolgend erläutert.

Erfindungsgemäß ist vorgesehen, dass bei dem Verfahren zur Bestimmung der statischen Förderhöhe $H_{static}$ eines in einem Arbeitspunkt B betriebenen drehzahlgeregelten Kreiselpumpenaggregats in einem offenen hydraulischen System, die Förderhöhe H des Kreiselpumpenaggregats in diesem Arbeitspunkt B zum Erhalt einer Förderhöhenschwankung $\Delta H$ mit einer Anregungsfrequenz $f_g$ moduliert wird, die derart niedrig ist, dass eine Förderstromschwankung $\Delta Q$, insbesondere ohne Phasenverschiebung zwischen dem Förderstrom (Q) und der Förderhöhe (H), bewirkt wird, wobei aus der Förderhöhenschwankung $\Delta H$ und der Förderstromschwankung $\Delta Q$ Modulationsgrößen $H_0$, $Q_0$, $H_1$, $Q_1$ ermittelt werden, unter deren Verwendung die statischen Förderhöhe $H_{static}$ bestimmt wird.

Der besondere Vorteil dieses Verfahrens besteht darin, dass die statische Förderhöhe $H_{static}$ im laufenden Normalbetrieb des Kreiselpumpenaggregats, in dem der aktuelle Arbeitspunkt B vorliegt, ermittelt werden kann. Vom Arbeitspunkt B wird im Mittel nicht abgewichen und es findet kein zum Normalbetrieb gesonderter Systemidentifikationsprozess statt.

Das Verfahren kann in allen offenen hydraulischen Systemen eingesetzt werden, wobei der Begriff "offen" hier in dem Sinne zu verstehen ist, dass das hydraulische System keinen oder jedenfalls nicht nur einen in sich abgeschlossenen Kreislauf bildet, in dem eine reine Zirkulation des Fördermediums stattfindet. Es kann sich bei dem hydraulischen System beispielsweise um eine Bohrlochpumpe mit angeschlossener Druckleitung, um eine Abwasserhebeanlage mit angeschlossener Druckleitung, um ein Trinkwasserversorgungsnetzwerk oder um ein beliebiges anderes Rohrleitungsnetzwerk handeln, in dem die Kreiselpumpe fördert und das eine statische Förderhöhe hat, wie sie offenen hydraulischen Systemen immanent ist.

Die Modulation der Förderhöhe kann beispielsweis durch eine Modulation der Drehzahl N(t) erreicht werden. Dies kann durch Beaufschlagung eines Sollwerts für die im Arbeitspunkt B vorliegende Betriebsdrehzahl $N_0$ mit einem periodischen Anregungssignal $F_g(t)$ einer Anregungsfrequenz $f_g$ bewirkt werden:

$$(Gl. 2) \qquad N(t) = N_0 + N_1 \cdot F_g(t).$$

Vorzugsweise handelt es sich bei dem Anregungssignal $F_g(t)$ um ein Sinussignal $F_g(t) = \sin(2\pi f_g \cdot t)$. Die Modulationsamplitude $N_1$ kann zwischen 1% bis 10% von der aktuellen Betriebsdrehzahl oder Nenndrehzahl der Pumpe oder zwischen 10 U/min und 100 U/min betragen.

Im Falle einer Drehmomentregelung ist es alternativ möglich, die Modulation der Förderhöhe durch Beaufschlagung des im Arbeitspunkt B vorliegenden Betriebsdrehmoments zu erreichen.

Die Anregungsfrequenz $f_g$ ist so niedrig zu wählen, dass die geförderte oder zu fördernde Flüssigkeit trotz ihrer Massenträgheit der periodischen Schwankung folgen kann. Dies ist natürlich abhängig von der Massenträgheit bzw. dem insgesamt in Bewegung zu versetzenden Flüssigkeitsvolumen. Es hat sich gezeigt, dass bereits eine Anregungsfrequenz

$f_g$ kleiner als 1Hz in Fällen hydraulischer Systeme mit einem vergleichsweise geringen Flüssigkeitsvolumen geeignet ist. Vorzugsweise ist die Anregungsfrequenz $f_g$ kleiner 0,5Hz. Gleichzeitig sollte die Anregungsfrequenz $f_g$ nicht zu klein sein, damit das System als quasi-stationär betrachtet werden kann, Änderungen des hydraulischen Systems, z.B. durch Öffnen oder Schließen von Zapfstellen, einen geringen Einfluss haben und die Erkennung nicht zu lang dauert. Es hat sich gezeigt, dass eine Anregungsfrequenz $f_g$ oberhalb von 0,05 Hz, insbesondere bei ca. 0,1Hz ideal ist.

Bevorzugt erfolgt die Bestimmung der statischen Förderhöhe anhand einer die Anlagenkurve des hydraulischen Systems beschreibenden Gleichung, die die für einen bestimmten Förderstrom Q erforderliche Förderhöhe H angibt und einen quadratischen Term umfasst, dessen Koeffizient den hydraulischen Widerstand R des Systems angibt. Über die Anlagenkurve ist die Ermittlung der statischen Förderhöhe einfach möglich. Besonders einfach ist dies, wenn die Gleichung nur den quadratischen Term und einen förderstromunabhängigen Term, d.h. keinen linearen Term umfasst, der die statische Förderhöhe Hstatic angibt, da in diesem Fall kein weiterer Parameter ermittelt werden muss.

Zur Bestimmung des hydraulischen Widerstands R können zumindest einige der Modulationsgrößen verwendet werden.

Geeigneterweise sind die ermittelten Modulationsgrößen der jeweilige Gleichanteil $H_0$, $Q_0$ der Förderhöhe H und des Förderstroms Q und die jeweilige Amplitude $H_1$, $Q_1$ der Förderhöhenschwankung $\Delta H$ und der Förderstromschwankung $\Delta Q$.

Die Gleichanteile $H_0$, $Q_0$ sind die Mittelwerte, um die die Förderhöhe H und den Förderstrom Q jeweils schwanken. So ist der Gleichanteil $H_0$ der Förderhöhe H die während des Verfahrens vorliegende mittlere Förderhöhe H. Ferner ist der Gleichanteil $Q_0$ des Förderstroms Q der während des Verfahrens vorliegende mittlere Förderstrom Q. Gemeinsam definieren die beiden Gleichanteile $H_0$, $Q_0$ den Betriebspunkt im HQ-Diagramm.

Beispielsweise kann der Gleichanteil $H_0$ der Förderhöhe H durch Integration der Förderhöhe H über zumindest eine Periode bestimmt und/ oder der Gleichanteil $Q_0$ des Förderstroms Q durch Integration des Förderstroms Q über zumindest eine Periode bestimmt werden. Die Gleichanteile bilden somit jeweils das arithmetische Mittel der Förderhöhe H bzw. des Förderstroms Q. Somit können die Gleichanteile $H_0$, $Q_0$ mathematisch ausgedrückt wie folgt berechnet werden:

$$\text{(Gl. 3)} \qquad H_0 = \int_0^T H(t)\, dt$$

$$\text{(Gl. 4)} \qquad Q_0 = \int_0^T Q(t)\, dt$$

Eine kontinuierliche Bestimmung der für die Integration erforderlichen Förderhöhe H(t) und des Förderstroms Q(t) kann auf unterschiedliche Weise erfolgen, beispielsweise messtechnisch. So kann der Differenzdruck mittels eines oder zweier Sensoren gemessen und daraus die Förderhöhe bestimmt werden. Ferner kann ein Volumenstromsensor zur Messung des Förderstroms verwendet werden. Um ohne Sensoren auszukommen, kann die Bestimmung des Förderstroms und der Förderhöhe alternativ rein rechnerisch erfolgen.

Herzu kann beispielsweise das in der europäischen Patentanmeldung EP 3123033 A1 beschriebene Verfahren verwendet werden, das die hydraulische Impedanz des Systems ausnutzt, indem die Förderhöhe moduliert und aus der daraus folgenden System antwort, die sich beispielsweise in der Schwankung der elektrischen Leistungsaufnahme manifestiert, durch Auswertung zumindest eines Sinus-Integrals der Systemantwort, ähnlich einer Fourier-Transformation, der Förderstrom bestimmt wird. Hinsichtlich der Einzelheiten wird auf die EP 3123033 A1 verwiesen. Aus dem allgemein bekannten physikalisch-mathematischen Zusammenhang zwischen Förderstrom Q und Förderhöhe H am Pumpenaggregat kann dann die Förderhöhe H ermittelt werden, so dass der hydraulische Arbeitspunkt B(Q, H) des Pumpenaggregats feststeht. Dieses Ermittlungsverfahren lässt sich besonders einfach und hervorragend mit dem erfindungsgemäßen Verfahren für die Bestimmung der statischen Förderhöhe kombinieren, wenn die dort verwendete Anregungsfrequenz größer, insbesondere um mehr als den Faktor 10 höher ist, als die bei dem erfindungsgemäßen Verfahren verwendete Frequenz. Beispielsweise kann die Anregungsfrequenz zur Bestimmung des Förderstroms zwischen 1Hz und 20Hz, vorzugsweise bei ca. 5 Hz liegen.

Gemäß einer weiteren Alternative können der Förderstrom und die Förderhöhe mit Hilfe eines modellbasierten Beobachters bestimmt werden. Ein solches Verfahren ist beispielsweise in der luxemburgischen Anmeldung LU501040 vom 17.12.2021 beschrieben.

Die Amplitude $H_1$ der Förderhöhenschwankung $\Delta H$ und die Amplitude $Q_1$ der Förderstromschwankung $\Delta Q$ definieren die Schwankungsbreite der Förderhöhe H und des Förderstroms Q. Sie entsprechen mathematisch der Hälfte der Differenz zwischen dem Maximalwert und dem Minimalwert der Förderhöhe H bzw. des Förderstroms Q, so dass deren Berechnung einfach möglich ist.

Berücksichtigt man auch eine Phasenverschiebung $\varphi_1$ der Förderhöhen- bzw. Förderstromschwankung zum Anregungssignal (Drehzahlschwankung), die im Falle einer unzureichend kleinen Anregungsfrequenz vorhanden ist,

können die Förderhöhenschwankung $\Delta H$ und die Förderstromschwankung $\Delta Q$ als komplexwertige Wechselgröße

$$\underline{X_1}(t) = X_1 e^{j(2\pi f_g t + \varphi)} = X_1 \left[\cos\left(2\pi f_g t + \varphi\right) + j \sin\left(2\pi f_g t + \varphi\right)\right]$$

betrachtet, wie folgt berechnet werden:

$$\underline{X_1} = X_{1,cos} + j\, X_{1,sin}$$

mit

$$X_{1,sin} = \int_0^T X(t) \cdot \sin(2\pi f_g)\, dt \text{ und } X_{1,cos} = \int_0^T X(t) \cdot \cos(2\pi f_g)\, dt$$

Die Amplitude $X_1$ der Wechselgröße $X_1$ ist $X_1 = \sqrt{X_{1,cos}^2 + X_{1,sin}^2}$ und die Phase $\varphi_1 = arctan \frac{X_{1,sin}}{X_{1,cos}}$.

Liegt allerdings keine oder eine vernachlässigbar kleine Phasenverschiebung $\varphi_1$ vor, so kann/ können die Amplitude $H_1$ der Förderhöhenschwankung $\Delta H$ direkt durch die Integration des Produkts aus der Förderhöhe H und einem Sinus- oder Cosinus-Signal mit der Anregungsfrequenz $f_g$ über zumindest eine Periode bestimmt werden, und/ oder die Amplitude $Q_1$ der Förderstromschwankung $\Delta Q$ direkt durch Integration des Produkts aus dem Förderstrom H und einem Sinus- oder Cosinus-Signal mit der Anregungsfrequenz $f_g$ über zumindest eine Periode T bestimmt werden. Somit können die Amplituden $H_1$, $Q_1$ mathematisch ausgedrückt wie folgt berechnet werden:

$$(Gl.\ 5) \qquad H_1 = \int_0^T H(t) \cdot \sin(2\pi f_g)\, dt$$

$$(Gl.\ 6) \qquad Q_1 = \int_0^T Q(t) \cdot \sin\left(2\pi f_g\right) dt$$

Unter Verwendung der Amplitude $H_1$, $Q_1$ der Förderhöhenschwankung $\Delta H$ und der Förderstromschwankung $\Delta Q$ sowie des Gleichanteils $Q_0$ des Förderstroms Q kann dann der aktuelle hydraulische Widerstand R des Systems ermittelt werden. Der aktuelle hydraulische Widerstand R ist die Steigung der Anlagenkurve im vorliegenden Arbeitspunkt. Er kann anschließend für die Bestimmung der statischen Förderhöhe $H_{static}$ anhand der die Anlagenkurve des hydraulischen Systems beschreibenden Gleichung verwendet werden.

Bevorzugt erfolgt die Ermittlung des hydraulischen Widerstands R des Systems gemäß der Gleichung

$$(Gl.\ 7) \qquad R_h = \frac{H_1}{Q_1 \cdot 2Q_0}, \text{ in der}$$

$R_h$ der hydraulische Widerstand,
$H_1$ die Amplitude der Förderhöhenschwankung $\Delta H$,
$Q_1$ die Amplitude der Förderstromschwankung $\Delta Q$ und
$Q_0$ der Gleichanteil des Förderstroms Q ist.

Die Bestimmung der statischen Förderhöhe $H_{static}$ ist anhand der Anlagenkurve des hydraulischen Systems besonders einfach, da ihr prinzipieller Verlauf bekannt ist, und der Arbeitspunkt $B(H_0, Q_0)$, dessen Koordinaten den beiden zuvor genannten Gleichanteilen entsprechen, auf ihr liegt. Vorteilhafterweise kann als Anlagenkurve des Systems eine quadratische Gleichung in der Art $H = R \cdot Q^2 + H_{static}$ verwendet werden, weil diese die Physik mit guter Genauigkeit beschreibt und nur den Parameter R aufweist, der die Steigung der Anlagenkurve bzw. den zuvor berechneten hydraulischen Widerstand beschreibt. Diese Anlagenkurve ermöglicht es also, die statische Förderhöhe $H_{static}$ unter Verwendung der Gleichanteile $H_0$, $Q_0$ der Förderhöhe H und des Förderstroms Q und des hydraulischen Widerstands des Systems zu ermitteln.

Dies kann derart erfolgen, dass die statischen Förderhöhe $H_{static}$ gemäß der Gleichung

$$(\text{Gl. 8}) \qquad H_{static} = H_0 - R_h \cdot Q_0{}^2$$

bestimmt wird, in der

$H_{static}$ die statische Förderhöhe,
$H_0$ der Gleichanteil der Förderhöhe H,
$Q_0$ der Gleichanteil des Förderstroms Q und
$R_h$ der hydraulische Widerstand des Systems ist.

Die Erfindung betrifft des Weiteren ein drehzahlregelbares Kreiselpumpenaggregat umfassend eine Kreiselpumpe, einen diese antreibenden Elektromotor und eine Pumpenelektronik zur Steuerung und/ oder Regelung des Elektromotors, wobei die Pumpenelektronik eingerichtet ist, das erfindungsgemäße Verfahren auszuführen. Die Pumpenelektronik umfasst geeigneterweise einen Frequenzumrichter und eine Drehzahl- und/ oder Drehmomentregelung.

Weitere Merkmale, Eigenschaften, Wirkungen und Vorteile der Erfindung werden nachfolgend anhand von Ausführungsbeispielen und der beigefügten Figuren näher erläutert. Die in den Figuren enthaltenen Bezugszeichen behalten von Figur zu Figur ihre Bedeutung. In den Figuren bezeichnen Bezugszeichen stets dieselben oder äquivalente Komponenten, Bereiche, Richtungs- oder Ortsangaben.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus. Es zeigen:

Figur 1: HQ-Diagramm mit einer Pumpenkennlinie 2 und einer Anlagenkurve1, die einen statischen Förderhöhenabfall $H_{static}$ umfasst

Figur 2: HQ-Diagramm gemäß Figur 1 mit einer gegenüber der Trägheit der geförderten Flüssigkeit schnellen Förderhöhenmodulation

Figur 3: HQ-Diagramm gemäß Figur 1 mit einer gegenüber der Trägheit der geförderten Flüssigkeit langsamen Förderhöhenmodulation

Figur 4: HQ-Diagramm mit einer Pumpenkennlinie 2 und einer Anlagenkurve 1, die einen statischen Förderhöhenabfall $H_{static}$ umfasst, und Veranschaulichung einer Schwankung um den im Schnittpunkt der Kurven liegenden Betriebspunkt B der Kreiselpumpe

Figur 5: Darstellung einer Drehzahlvariation mit Gleichanteil $N_0$ und Amplitude $N_1$ und der daraus resultierenden Förderstromschwankung $\Delta Q$ mit Gleichanteil $Q_0$, der Amplitude $Q_1$ und der auf die Drehzahlanregung bezogene Phasenverschiebung $\varphi Q_1$ über der Zeit t

Figur 6: ein Ablaufdiagramm des erfindungsgemäßen Verfahrens.

Figur 1 zeigt ein HQ-Diagramm mit einer Anlagenkurve 1 eines hydraulischen Systems mit einer positiven statischen Förderhöhe $H_{static}$. Die Anlagekurve 1 beschreibt den physikalischen Zusammenhang zwischen der Förderhöhe H und dem Förderstrom Q und gibt somit an, welche Förderhöhe H benötigt wird, respektive welchen zur Förderhöhe H proportionalen Differenzdruck $\Delta p$ ein Kreiselpumpenaggregat in dem hydraulischen System aufbringen muss, um einen bestimmten Förderstrom Q zu erhalten. Die statische Förderhöhe $H_{static}$ ist diejenige Förderhöhe, die mindestens erreicht werden muss, damit sich überhaupt ein Förderstrom größer null ergibt. Besteht kein originärer Druckunterschied zwischen der Saugseite und der Druckseite des Kreiselpumpenaggregats, entspricht die statische Förderhöhe der geodätischen Förderhöhe. Die Anlagenkurve 1 kann mathematisch vereinfacht durch die Gleichung $H(Q) = R_h \cdot Q^2 + H_{static}$ beschrieben werden.

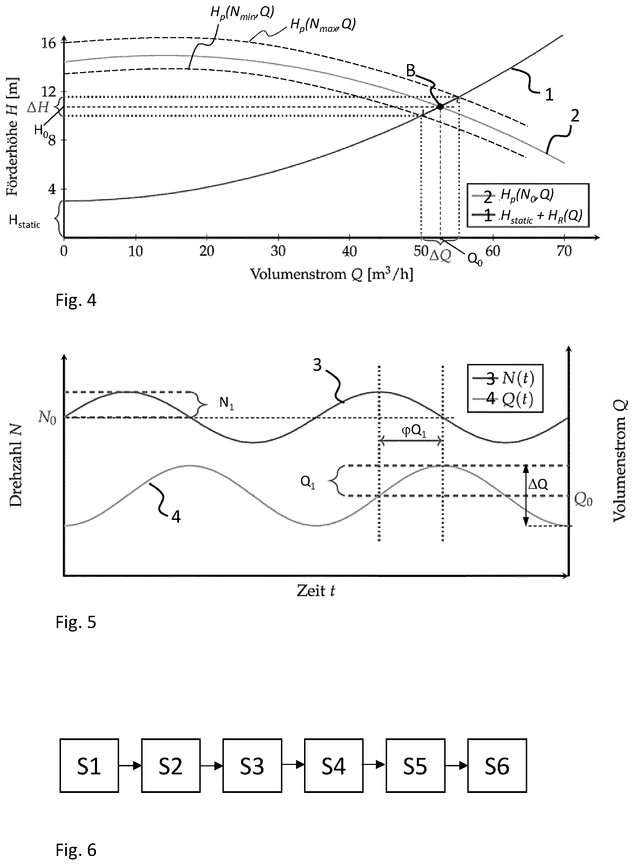

In dem HQ-Diagramm von Figur 1 ist des Weiteren eine Pumpenkurve 2 eingezeichnet. Sie beschreibt für eine konstante Betriebsdrehzahl $N_0$ den physikalischen Zusammenhang zwischen der Förderhöhe H und dem Förderstrom Q am Kreiselpumpenaggregat. Der sich im Betrieb des Kreiselpumpenaggregats bei der Betriebsdrehzahl $N_0$ einstellende Arbeitspunkt B liegt im Schnittpunkt der Pumpenkurve 2 mit der Anlagenkurve 1 d.h. der Kombination aus der geodätischen Höhe $H_{static}$ und dem Förderhöhenabfall $H_R(Q) = R_h \cdot Q^2$, der durch den hydraulischen Widerstand R des Rohrnetzes bedingt ist (vgl. auch Figur 4).

Wird der Förderhöhe H im Arbeitspunkt B ein sinusförmiges Signal $F_A$ aufgeprägt, dessen Anregungsfrequenz $f_A$ derart hoch gewählt ist, dass das hydraulische System aufgrund der Massenträgheit der geförderten Flüssigkeit, beispielsweise Wasser, der damit bewirkten Förderhöhenmodulation nicht folgen kann, bleibt der Förderstrom Q im Wesentlichen konstant und es ergibt lediglich eine Förderhöhenschwankung $\Delta H$. Der Arbeitspunkt B ändert sich daher für $Q \approx$ constant parallel zur Druckachse, d.h. vertikal. Es erfolgt also eine gegenüber der Trägheit der geförderten Flüssigkeit schnelle Förderhöhenmodulation. Dies ist in Figur 2 gezeigt. Eine solche Modulation kann verwendet werden, um den Förderstrom Q sensorlos zu bestimmen, wie dies in der europäischen Patentanmeldung EP 3123033 A1 beschrieben ist.

Die Frequenz $f_A$ (Anregungsfrequenz) kann zwischen 1Hz und 20 Hz, beispielsweise bei ca. 5Hz liegen.

Bei dem erfindungsgemäßen Verfahren zur Bestimmung der statischen Förderhöhe $H_{static}$ wird demgegenüber der Förderhöhe H im Arbeitspunkt B ein anderes sinusförmiges Signal $F_g(t)$ aufgeprägt, dessen Frequenz $f_g$ derart niedrig gewählt ist, dass das hydraulische System dieser Anregung ohne nennenswerte Phasenverschiebung folgen kann. In diesem Fall verlaufen die Arbeitspunkte B nicht mehr vertikal, sondern auf bzw. entlang der Rohrnetzparabel, wie dies Figur 3 veranschaulicht. Beispielsweise beträgt die Frequenz $f_g$ dieses sinusförmigen Signals $F_g$ zwischen $f_g$ = 1Hz und 0,05Hz, beispielsweise ca. 0,1 Hz. Im letzteren Fall unterscheiden sich die Frequenzen $f_g$ = 0,1 Hz und $f_A$ = 5Hz um den Faktor 50.

Die periodische Änderung der Förderhöhe H (Modulation) wird dadurch erreicht, dass im Rahmen der Drehzahlregelung des Kreiselpumpenaggregats der zur Erreichung des Arbeitspunktes B erforderlichen Solldrehzahl $N_0$ das Anregungssignal $F_g(t)$ überlagert wird, so dass sich die Istdrehzahl N(t) wie folgt darstellt:

$$\text{(Gl. 9)} \qquad N(t) = N_0 + F_g(t) = N_0 + N_1 \sin(2\pi f_g \cdot t)$$

Das Anregungssignal $F_g(t)$ hat die o.g. Anregungsfrequenz $f_g$ von beispielsweise 0,1 Hz und eine Anregungsamplitude $N_1$ von beispielsweise 10 bis 50U/min. Die Istdrehzahl N(t) schwankt dadurch zwischen einem Minimalwert $N_{min} = N_0 - N_1$ und einem Maximalwert $N_{max} = N_0 + N_1$, so dass sich die Pumpenkurve 2 hebt und senkt. Dies ist in Figur 4 veranschaulicht. Der Arbeitspunkt $B(H_0,Q_0)$ wandert dadurch entlang der Anlagenkurve 1 und es wird eine Förderhöhenschwankung $\Delta H$ (Druckschwankung) einerseits und eine Förderstromschwankung $\Delta Q$ andererseits bewirkt.

Zur Verdeutlichung des zeitlichen Verlaufes 3 der niederfrequenten Drehzahlanregung und der daraus resultierenden Förderstromschwankung $\Delta Q$ wird der zeitliche Verlauf der Drehzahl N(t) und der zeitliche Verlauf des Förderstroms Q(t) in Figur 5 illustriert. Bei der Drehzahlvariation ist die Betriebsdrehzahl ein Gleichanteil, der der unmodulierten Solldrehzahl $N_0$ entspricht und der von der Anregungsamplitude $N_1$ überlagert wird. Der zeitliche Verlauf 4 der daraus resultierenden Förderstromschwankung $\Delta Q$ hat den Gleichanteil $Q_0$, die Amplitude $Q_1$ und eine auf die Drehzahlanregung bezogene Phasenverschiebung $\varphi_{Q1}$. Analog zu dieser Förderstromschwankung $\Delta Q$ könnte auch die Förderhöhenschwankung $\Delta H$ mit dem Gleichanteil $H_0$, der Amplitude $H_1$ und der auf die Drehzahlanregung bezogenen Phasenverschiebung $\varphi_{H1}$ in einem Diagramm dargestellt werden. Idealerweise wird die Drehzahlanregung derart niederfrequent gewählt, dass die Phasenverschiebung $\varphi_{Q1}$ gleich null ist.

Aufgrund ihrer periodischen Schwankung sind die Förderhöhe und der Förderstrom nun Wechselgrößen. Ihr Wechselanteil, d.h. $\Delta Q = Q_1 \cdot \sin(2\pi f_g + \varphi_{Q1})$ und $\Delta H = H_1 \cdot \sin(2\pi f_g + \varphi_{H1})$ kann, wie in der Elektrotechnik üblich, als komplexe Zahl betrachtet werden, bestehend aus Realteil und Imaginärteil mit der imaginären Einheit j, und umfassend den Betrag $Q_1$, $H_1$ und die Phase $\varphi_{Q1}$, $\varphi_{H1}$. Stellt man die Förderstromschwankung $\Delta Q$ und die Förderhöhenschwankung $\Delta H$ jeweils als komplexe Zahl $\underline{Q}_1$, $\underline{H}_1$ wie folgt dar:

$$\text{(Gl. 10)} \qquad \underline{Q}_1 = Q_1(\cos(\varphi_{Q1}) + j\sin(\varphi_{Q1})) \text{ und}$$

$$\text{(Gl. 11)} \qquad \underline{H}_1 = H_1(\cos(\varphi_{H1}) + j\sin(\varphi_{H1})),$$

kann für die hydraulische Anlage analog zu einer elektrischen Impedanz eine komplexwertige hydraulische Impedanz $\underline{Z}_h$ = $Z_h(\cos(\varphi_{Zh}) + j\sin(\varphi_{Zh}))$ definiert werden, die durch den Quotienten aus Förderhöhenschwankung $\Delta H$ und Förderstromschwankung $\Delta Q$, genauer gesagt deren komplexen Amplituden $\underline{H}1$, $\underline{Q}1$ gebildet ist:

$$\text{(Gl. 12)} \qquad \underline{Z}_h = \frac{\underline{H}_1}{\underline{Q}_1} = Z_h(\cos(\varphi_{Zh}) + j\sin(\varphi_{Zh}))$$

Die hydraulische Impedanz beschreibt somit den Zusammenhang zwischen der anregungsbedingten Förderhöhenamplitude $H_1$ und der resultierenden Förderstromamplitude $Q_1$, welche sich in Abhängigkeit des differentiellen Widerstands $R'_h$ und der hydraulischen Induktivität $L_h$ des Systems bzw. Rohrnetzes sowie der Anregungsfrequenz $f_g$ ergibt:

$$\text{(Gl. 13)} \qquad \underline{Z}_h = \frac{\underline{H}_1}{\underline{Q}_1} = R'_h + j2\pi f_g L_h$$

Der differentielle Widerstand $R'_h$ entspricht dem Realteil der hydraulischen Impedanz $\underline{Z}_h$ und kann somit auch

durch die Amplituden $H_1$ und

Q$_1$ und die Phasenwinkel $\varphi_{H1}$ und $\varphi_{Q1}$ der Förderhöhen- und Förderstromschwankung beschrieben und folgemäßig auch daraus berechnet werden:

$$(Gl.\ 14) \qquad R_h' = Z_h \cos(\varphi_{Zh}) = \frac{H_1}{Q_1} \cos(\varphi_{H1} - \varphi_{Q1})$$

Der differentielle Widerstand $R_h'$ stellt den für den Arbeitspunkt B mit den Gleichanteilen $Q_0$ und $H_0$ des Förderstroms Q und der Förderhöhe H linearisierten Zusammenhang zwischen der Förderhöhe H und dem Förderstrom Q der Gleichung der Anlagenkurve 1 dar, welche den nicht differentiellen Widerstand $R_h$ enthält: $H_0 = R_h \cdot Q_0^2$. Somit ergibt sich folgender Zusammenhang zwischen dem Widerstand $R_h$ und dem differentiellen Widerstand $R_h'$ :

$$(Gl.\ 15) \qquad R_h' = 2\,R_h Q_0 = \frac{H_1}{Q_1} \cos(\varphi_{H1} - \varphi_{Q1})$$

Somit kann bei Kenntnis des Gleichanteils $Q_0$ des Förderstroms Q anhand der Amplituden $H_1$ und $Q_1$ und der Phasenwinkel $\varphi_{H1}$ und $\varphi_{Q1}$ der Förderhöhe H und des Förderstroms Q der "normale" Widerstand $R_h$ berechnet werden:

$$(Gl.\ 16) \qquad R_h = \frac{1}{2Q_0} \cdot \frac{H_1}{Q_1} \cos(\varphi_{H1} - \varphi_{Q1})$$

Da aufgrund der niederfrequenten Anregung mit der Frequenz $f_g$ die Förderstrom- und Förderhöhenschwankung nahezu synchron sind ($\varphi_{H1} \approx \varphi_{Q1}$), ist der Ausdruck $\cos(\varphi_{H1} - \varphi_{Q1})$ in sehr guter Näherung gleich 1. Somit kann die vorstehende Berechnungsvorschrift für den hydraulischen Widerstand $R_h$ vereinfacht werden zu

$$(Gl.\ 17) \qquad R_h \approx \frac{H_1}{Q_1 2Q_0}$$

Diese Vereinfachung ist auch deshalb von Vorteil, weil für eine exakte Berechnung des hydraulischen Widerstands $R_h$ die Phasenwinkel $\varphi_{H1}$ und $\varphi_{Q1}$ benötigt werden würden. Sind diese jedoch infolge von Störeinflüssen leicht fehlerbehaftet, ergibt sich ein erheblicher Fehler bei dem Wert für den hydraulischen Widerstand $R_h$.

Nachdem der hydraulische Widerstand $R_h$ des Systems bzw. Rohrnetzes anhand von Gleichung 16 oder 17 bestimmt wurde, kann die statische Förderhöhe $H_{static}$ aufgrund der Anlagenkurve 1 unter Verwendung der Gleichanteile $H_0, Q_0$ für die Förderhöhe H und den Förderstrom Q, die das im Arbeitspunkt B vorliegende Wertepaar der Förderhöhe H und des Förderstroms Q bilden, wie folgt berechnet werden:

$$(Gl.\ 18) \qquad H_{static} = H_0 - R_h \left( Q_0^2 + \frac{1}{2} Q_1^2 \right)$$

Für den Fall, dass die Amplitude $Q_1$ der Förderstromschwankung $\Delta Q$ sehr viel kleiner ist, als der im Arbeitspunkt B vorliegenden Förderstrom $Q_0$, kann die vorstehende Gleichung weiter vereinfacht werden zu:

$$(Gl.\ 19) \qquad H_{static} \approx H_0 - R_h Q_0^2$$

Vor dem Hintergrund der vorstehenden Ausführungen kann das erfindungsgemäße Verfahren zur Bestimmung der statischen Förderhöhe $H_{static}$ durch folgende Verfahrensschritte gebildet sein, die in Figur 6 veranschaulicht sind:

S1: Erzeugung einer Förderhöhenmodulation

In einem ersten Schritt S1 erfolgt eine Modulation der Förderhöhe H des Kreiselpumpenaggregats im Arbeitspunkt B mit einer Anregungsfrequenz $f_g$ zum Erhalt einer Förderhöhenschwankung $\Delta H$, wobei die Anregungsfrequenz $f_g$

derart gering ist, dass auch eine Förderstromschwankung ΔQ bewirkt wird. Vorzugsweise erfolgt die Modulation durch Beaufschlagung der im Arbeitspunkt B vorliegenden Solldrehzahl $N_0$ einer Drehzahlregelung mit einem Anregungssignal $F_g(t)$ mit der genannten Anregungsfrequenz $f_g$ Diese kann z.B. $f_g = 0,1$Hz betragen. Im Falle einer Drehmomentregelung kann auch das einzustellende Soll-Drehmoment mit einem entsprechenden Anregungssignal beaufschlagt werden.

S2: Förderhöhen- und Förderstrombestimmung

In einem zweiten Schritt S2 erfolgt eine kontinuierliche Bestimmung der Förderhöhe H und des Förderstroms Q. Dies kann durch Messung mittels entsprechender Sensoren oder rechnerisch erfolgen.

Die rechnerische Ermittlung kann beispielsweise durch zusätzliche Modulation der Förderhöhe bzw. Drehzahl mit einem periodischen Anregungssignal erfolgen, dessen Anregungsfrequenz $f_A$ mindestens um den Faktor 10 höher ist als die erstgenannte Anregungsfrequenz $f_g$, damit sich diese zweite Modulation aufgrund der Massenträgheit des geförderten Fluids nicht wesentlich auf den Förderstrom auswirkt. Anschließend wird die Systemantwort ausgewertet, beispielswiese in Gestalt der elektrischen Leistungsaufnahme des Kreiselpumpenaggregats, indem daraus ein Sinus-Integral berechnet und aus dem Integralwert anhand einer Verknüpfung desselben, in Gestalt einer Tabelle oder Gleichung, mit dem Förderstrom, der Förderstrom Q berechnet wird, wie dies in der EP 3123033 A1 beschrieben ist. Die Förderhöhe H kann dann aus dem Förderstrom Q berechnet werden.

Die rechnerische Ermittlung kann alternativ anhand eines mathematischen Modells der Kreiselpumpe in dem hydraulischen System erfolgen, z.B. in Gestalt eines regelungstechnischen Beobachters, wie dies beispielsweise in der luxemburgischen Anmeldung LU501040 beschrieben ist.

S3: Amplitudenbestimmung

In einem dritten Schritt S3 werden die Amplitude $Q_1$, $H_1$ der Förderhöhenschwankung ΔH und der Förderstromschwankung ΔQ ermittelt. Die Amplituden $Q_1$, $H_1$ bilden erste zu bestimmende Modulationsgrößen. Hierzu kann in einem ersten Teilschritt S3a die Amplitude $Q_1$ der Förderstromschwankung ΔQ durch Integration des Produkts aus dem ermittelten Förderstrom Q und einem Sinussignal mit der Anregungsfrequenz $f_A$ über wenigstens eine Periode des Anregungssignals $F_A(t)$ bestimmt werden. In einem zweiten Teilschritt S3b kann in gleicher Weise die Amplitude $H_1$ der Förderhöhenschwankung ΔH durch Integration des Produkts aus der ermittelten Förderhöhe H und einem Sinussignal mit der Anregungsfrequenz $f_A$ über wenigstens eine Periode des Anregungssignals $F_A(t)$ bestimmt werden. Die beiden Teilschritte S3a, S3b können auch vertauscht werden.

S4: Arbeitspunktbestimmung

In einem vierten Schritt S4 werden die Gleichanteile $Q_0$, $H_0$ der Förderhöhe H und des Förderstroms Q ermittelt. Die Gleichanteile $Q_0$, $H_0$ bilden zweite zu bestimmende Modulationsgrößen. Sie sind im HQ Diagramm das den Arbeitspunkt B auf der Anlagekurve 1 definierende Wertepaar, so dass mit der Berechnung der Gleichanteile $Q_0$, $H_0$ der Arbeitspunkt bestimmt ist. Hierzu kann in einem ersten Teilschritt S4a der Gleichanteil $Q_0$ des Förderstroms Q durch Integration des ermittelten Förderstroms Q über wenigstens eine Periode des Anregungssignals $F_A(t)$ bestimmt werden. In einem zweiten Teilschritt S4b kann in gleicher Weise der Gleichanteil $H_0$ der Förderhöhe H durch Integration der ermittelten Förderhöhe H über wenigstens eine Periode des Anregungssignals $F_A(t)$ bestimmt werden. Die beiden Teilschritte S4a, S4b können auch vertauscht werden.

Die Schritte S3 und S4 können auch in umgekehrter Reihenfolge ausgeführt werden.

S5: Widerstandsbestimmung

In einem fünften Schritt S5 wird der aktuelle hydraulische Widerstand $R_h$ des Systems bzw. Rohrnetzes, ermittelt. Dies erfolgt unter Verwendung der ermittelten Amplituden $Q_1$, $H_1$ der Förderhöhenschwankung ΔH und der Förderstromschwankung ΔQ sowie des ermittelten Gleichanteils $Q_0$ des Förderstroms Q durch Auswertung der o.g. Gleichung 17, sofern die Anregungsfrequenz derart niedrig ist, dass die Förderhöhenschwankung ΔH und die Förderstromschwankung ΔQ in Phase sind.

Falls dies nicht der Fall ist, kann zusätzlich die Phasenlage $\varphi_{H1}$ und/ oder $\varphi_{Q1}$ wie folgt bestimmt werden:

$$H_{1,sin} = \int_0^T H(t) \cdot \sin(2\pi f_g)\, dt$$

$$H_{1,cos} = \int_0^T H(t) \cdot \cos(2\pi f_g)\, dt$$

$$Q_{1,sin} = \int_0^T Q(t) \cdot \sin(2\pi f_g)\, dt$$

$$Q_{1,cos} = \int_0^T Q(t) \cdot \cos(2\pi f_g)\, dt$$

wobei gilt:

$$\varphi_{H1} = \arctan\left(\frac{H_{1,cos}}{H_{1,sin}}\right)$$

$$\varphi_{Q1} = \arctan\left(\frac{Q_{1,cos}}{Q_{1,sin}}\right)$$

Man beachte, dass hier der $H_{1,sin}$ bzw. $Q_{1,sin}$ Term im Nenner steht, da die Anregung als Sinusfunktion definiert wurde. Mit Hilfe der Phasenlage und Gleichung 16 kann dann der Widerstand $R_h$ berechnet werden.

S6: Bestimmung der statischen Förderhöhe

In einem sechsten Schritt S6 wird schließlich die gesuchte statische Förderhöhe $H_{static}$ ermittelt. Dies erfolgt zumindest unter Verwendung der ermittelten Gleichanteile $Q_0$, $H_0$ der Förderhöhenschwankung $\Delta H$ und der Förderstromschwankung $\Delta Q$, also des Arbeitspunktes B, sowie unter Verwendung des ermittelten hydraulischen Widerstands $R_h$ durch Auswertung einer der o.g. Gleichungen 18 oder 19, vorzugsweise von Gleichung 19. Soll die Bestimmung der statischen Förderhöhe $H_{static}$ anhand von Gleichung 18 erfolgen, wird zusätzlich zu den genannten Größen noch die Amplitude $Q_1$ der Förderstromschwankung $\Delta Q$ verwendet.

Das beschriebene Verfahren wird von dem Kreiselpumpenaggregat ausgeführt, in dessen Pumpenelektronik es implementiert ist. Hierzu weist die Pumpenelektronik wenigstens einen Prozessor und einen programmierbaren, nichtflüchtigen Speicherbaustein auf, in dem ein Steuerprogramm mit Instruktionen gespeichert ist, deren Ausführung auf dem Prozessor die Durchführung des erfindungsgemäßen Verfahrens in der Pumpenelektronik und damit in dem Kreiselpumpenaggregat bewirken.

Die Pumpenelektronik umfasst

- erste Mittel zur Erzeugung einer Förderhöhenmodulation, die insbesondere zur Ausführung des Schritts S1 ausgebildet sind.
- zweite Mittel zur Bestimmung der Förderhöhe und des Förderstroms, die insbesondere zur Ausführung des Schritts S2 ausgebildet sind.
- dritte Mittel zur Bestimmung der Amplituden der Förderhöhen- und Förderstromschwankung, die insbesondere zur Ausführung des Schritts S3 ausgebildet sind.
- vierte Mittel zur Bestimmung des aktuellen Arbeitspunktes des Kreiselpumpenaggregats, die insbesondere zur Ausführung des Schritts S4 ausgebildet sind.
- fünfte Mittel zur Bestimmung des aktuellen hydraulischen Widerstands $R_h$ des Systems bzw. Rohrnetzes, die insbesondere zur Ausführung des Schritts S5 ausgebildet sind, und
- sechste Mittel zur Ermittlung der gesuchten statischen Förderhöhe $H_{static}$ des Systems, die insbesondere zur Ausführung des Schritts S6 ausgebildet sind.

Die ersten Mittel zur Erzeugung der Förderhöhenmodulation wirken auf eine Drehzahlregelung oder Drehmomentregelung ein, die ebenfalls Teil der Pumpenelektronik ist, indem sie ihr einen sich mit der Anregungsfrequenz $f_g$ ändernden Sollwert vorgeben, der dem Sollwert $N_0$ für den aktuellen Arbeitspunkt, der beispielsweise aus einer übergeordneten Kennlinienregelung stammen kann, überlagert wird. Die Drehzahlregelung oder Drehmomentregelung steuert zur Erreichung des modulierenden Sollwerts einen Frequenzumrichter, der ebenfalls Teil der Pumpenelektronik ist, um die entsprechende Drehzahl oder das entsprechende Drehmoment an dem Elektromotor einzustellen.

Die zweiten Mittel zur Bestimmung der Förderhöhe und des Förderstroms können prinzipiell eingerichtet sein, ein beliebiges Verfahren zur Arbeitspunktbestimmung auszuführen.

In einer Ausführungsvariante können die zweiten Mittel eine Auswertungs- und Verarbeitungseinheit umfassen, um die Messsignale von Sensoren zur Messung des Drucks oder Differenzdrucks und/ oder des Volumenstroms zu erfassen und zu verarbeiten. Hierzu kann die Auswertungs- und Verarbeitungseinheit in an sich bekannter Weise beispielsweise einen Verstärker, einen Analog/Digitalwandler, einen Arbeitsspeicher, einen Filter und/ oder einen Prozessor für die Signalverarbeitung, gegebenenfalls auch eine protokollbasierte Kommunikationsschnittstelle aufweisen, falls einer der Sensoren Messdaten mittels eines Kommunikationsprotokolls bereitstellt. In der Ausführungsvariante der Bestimmung der Förderhöhe und des Förderstroms durch eine Messung umfasst das Kreiselpumpenaggregat außerdem entsprechende Sensoren zur Messung des Drucks oder Differenzdrucks und/ oder des Förderstroms. Diese Sensoren können baulich in das Kreiselpumpenaggregat integriert sein, oder unabhängig davon sein und über eine entsprechende Kommunikationsverbindung, leitungsgebunden (Kabel) oder per Funk (z.B. Bluetooth, WLAN, ZigBee, RFID), mit der Pumpenelektronik, genauer gesagt, mit der Kommunikationsschnittstelle verbunden sein.

Alternativ zur vorgenannten Ausführungsvariante kann anstelle eines Sensors zur Volumenstrombestimmung, die elektrische Leistungsaufnahme ermittelt und der Volumenstrom hieraus bestimmt werden, beispielsweise durch Anwendung der Affinitätsgesetze oder durch einen Vergleich der aktuellen Leistungsaufnahme P mit einer zuvor ermittelten Tabelle von Leistungswerten oder durch Berechnung anhand einer Leistungskurve P(Q,n), die zuvor ermittelt und als Formel in einem Speicher der zweiten Mittel abgespeichert sein kann.

In einer anderen Ausführungsvariante können die zweiten Mittel zur Bestimmung der Förderhöhe und des Förderstroms ebenfalls auf die Drehzahlregelung oder Drehmomentregelung einwirken und ihr ein weiteres, sich mit einer zweiten, gegenüber der ersten Anregungsfrequenz $f_g$ höheren Anregungsfrequenz $f_A$ änderndes Anregungssignal $F_A(t)$ vorgeben, das dem Sollwert $N_0$ für den aktuellen Arbeitspunkt zusätzlich überlagert wird. Die zweiten Mittel umfassen dann ferner eine Auswerteeinheit, die eingerichtet ist, aus der Systemantwort auf die Anregung mit der zweiten Frequenz den Förderstrom zu ermitteln, wie dies in der europäischen Patentanmeldung EP 3123033 A1 beschrieben ist. Die Auswerteeinheit ist dann außerdem eingerichtet, aus dem Förderstrom die Förderhöhe zu berechnen.

In einer anderen Ausführungsvariante können die zweiten Mittel zur Bestimmung der Förderhöhe und des Förderstroms einen regelungstechnischen Beobachter mit einem mathematischen Modell des Kreiselpumpenaggregats und des angeschlossenen hydraulischen Systems umfassen und eingerichtet sein, aus diesem Modell die Förderhöhe und den Förderstrom zu bestimmen, wie dies in der luxemburgischen Anmeldung LU501040 vom 17.12.2021 beschrieben ist.

Die dritten Mittel zur Bestimmung der Amplituden der Förderhöhen- und Förderstromschwankung umfassen insbesondere eine Integralbildungseinheit. Sie sind eingerichtet, einerseits das Produkts aus dem ermittelten Förderstrom Q und einem Sinussignal mit der Anregungsfrequenz $f_A$ zu bilden und über wenigstens eine Periode des Anregungssignals $F_A(t)$ zu integrieren, und andererseits das Produkt aus der ermittelten Förderhöhe H und einem Sinussignal mit der Anregungsfrequenz $f_A$ zu bilden und über wenigstens eine Periode des Anregungssignals $F_A(t)$ zu integrieren, um die Amplituden $Q_1$, $H_1$ zu ermitteln.

Die vierten Mittel zur Bestimmung des aktuellen Arbeitspunktes des Kreiselpumpenaggregats sind eingerichtet, die Gleichanteile $Q_0$, $H_0$ der Förderhöhenschwankung $\Delta H$ und der Förderstromschwankung $\Delta Q$ zu ermitteln und umfassen hierzu eine zweite Integralbildungseinheit. Sie sind eingerichtet, einerseits den ermittelten Förderstrom Q über wenigstens eine Periode des Anregungssignals $F_A(t)$ zu integrieren, und andererseits die ermittelte Förderhöhe H über wenigstens eine Periode des Anregungssignals $F_A(t)$ zu integrieren, um die Gleichanteile $Q_0$, $H_0$ zu ermitteln.

Die fünften Mittel zur Bestimmung des aktuellen hydraulischen Widerstands $R_h$ umfassen eine erste Berech-nungseinheit, in der die Gleichung Gl. 17 implementiert ist. Sie sind eingerichtet, die berechneten Werte der Amplituden $H_1$, $Q_1$ und den Wert des Gleichanteils $Q_0$ des Förderstroms in die diese Gleichung einzusetzen und die Gleichung auszuwerten, um den hydraulischen Widerstands $R_h$ zu ermitteln bzw. zu schätzen.

Die sechsten Mittel zur Ermittlung der statischen Förderhöhe $H_{static}$ umfassen eine zweite Berechnungseinheit, in der die Gleichung Gl. 18 oder 19 implementiert ist. Sie sind eingerichtet, die berechneten Werte der Gleichanteile $H_0$, $Q_0$ sowie des hydraulischen Widerstands $R_h$, im Falle der Verwendung von Gleichung 18 auch den Wert der Amplitude Q1 der Förderstromschwankung in die entsprechende Gleichung 18 oder 19 einzusetzen und diese Gleichung auszuwerten, um die statische Förderhöhe $H_{static}$ zu ermitteln bzw. zu schätzen.

Das erfindungsgemäße Verfahren kann im laufenden Betrieb des Kreiselpumpenaggregats jederzeit aktiviert bzw. ausgeführt werden, um die statische Förderhöhe $H_{static}$ zu ermitteln, beispielsweise durch eine manuelle Auslösung durch einen Installateur oder Wartungstechniker oder durch die Pumpe selbst.

Das Verfahren kann im laufenden Betrieb auch dauerhaft aktiv sein. Der aktuelle Arbeitspunkt muss für keinen dieser Fälle verlassen werden, so dass das Verfahren nach außen kaum merkbar ist und den Betrieb anderer Komponenten des Systems nicht beeinträchtigt.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist.

**Patentansprüche**

1. Verfahren zur Bestimmung der statischen Förderhöhe ($H_{static}$) eines in einem Arbeitspunkt (B) betriebenen drehzahlgeregelten Kreiselpumpenaggregats in einem offenen hydraulischen System, **dadurch gekennzeichnet, dass** die Förderhöhe (H) des Kreiselpumpenaggregats im Arbeitspunkt (B) zum Erhalt einer Förderhöhenschwankung ($\Delta H$) mit einer Anregungsfrequenz ($f_g$) moduliert wird, die derart niedrig ist, dass eine Förderstromschwankung ($\Delta Q$) bewirkt wird, wobei aus der Förderhöhenschwankung ($\Delta H$) und der Förderstromschwankung ($\Delta Q$) Modulationsgrößen ($H_0$, $Q_0$, $H_1$, $Q_1$) ermittelt werden, unter deren Verwendung die statische Förderhöhe ($H_{static}$) bestimmt wird.

2. Verfahren nach Anspruch 1, **dadurch gekennzeichnet, dass** die Modulation der Förderhöhe (H) durch Beaufschlagung eines Sollwerts für die im Arbeitspunkt (B) vorliegende Betriebsdrehzahl ($N_0$) oder das im Arbeitspunkt (B) vorliegende Betriebsdrehmoment mit einem periodischen Anregungssignal ($F_g(t)$) einer Anregungsfrequenz ($f_g$) bewirkt wird.

3. Verfahren nach Anspruch 1 oder 2, **dadurch gekennzeichnet, dass** die Anregungsfrequenz ($f_g$) kleiner als 1Hz ist, vorzugsweise zwischen 0,5Hz und 0,05 Hz liegt, insbesondere ca. 0,1Hz beträgt.

4. Verfahren nach einem der vorherigen Ansprüche, **dadurch gekennzeichnet, dass** die Bestimmung der statischen Förderhöhe ($H_{static}$) anhand einer die Anlagenkurve (1) des hydraulischen Systems beschreibenden Gleichung erfolgt, die die für einen bestimmten Förderstrom (Q) erforderliche Förderhöhe (H) angibt und einen quadratischen Term umfasst, dessen Koeffizient den hydraulischen Widerstand (R) des Systems angibt.

5. Verfahren nach Anspruch 4, **dadurch gekennzeichnet, dass** die Gleichung nur den quadratischen Term und einen förderstromunabhängigen Term umfasst, der die statische Förderhöhe ($H_{static}$) angibt.

6. Verfahren nach einem der vorherigen Ansprüche, **dadurch gekennzeichnet, dass** die Modulationsgrößen ($H_0$, $Q_0$, $H_1$, $Q_1$) der Gleichanteil ($H_0$, $Q_0$) und die Amplitude ($H_1$, $Q_1$) der Förderhöhe (H) und des Förderstroms (Q) sind.

7. Verfahren zumindest nach Anspruch 6, **dadurch gekennzeichnet, dass** der Gleichanteil ($H_0$) der Förderhöhe (H) durch Integration der Förderhöhe (H) über zumindest eine Periode bestimmt wird und/ oder der Gleichanteil ($Q_0$) des Förderstroms (Q) durch Integration des Förderstroms (Q) über zumindest eine Periode bestimmt wird.

8. Verfahren zumindest nach Anspruch 6 oder 7, **dadurch gekennzeichnet, dass** die Amplitude ($H_1$) der Förderhöhenschwankung ($\Delta H$) durch Integration des Produkts aus der Förderhöhe (H) und einem Sinus- oder Cosinus-Signal mit der Anregungsfrequenz ($f_g$) über zumindest eine Periode bestimmt wird und/ oder die Amplitude ($Q_1$) der Förderstromschwankung ($\Delta Q$) durch Integration des Produkts aus dem der Förderstrom (H) und einem Sinus- oder Cosinus-Signal mit der Anregungsfrequenz ($f_g$) über zumindest eine Periode bestimmt wird.

9. Verfahren zumindest nach Anspruch 4 und 6, **dadurch gekennzeichnet, dass** der hydraulische Widerstand (R) des Systems im Arbeitspunkt (B) unter Verwendung der Amplitude ($H_1$, $Q_1$) der Förderhöhenschwankung ($\Delta H$) und der Förderstromschwankung ($\Delta Q$) und des Gleichanteils ($Q_0$) des Förderstroms (Q)ermittelt wird.

10. Verfahren zumindest nach Anspruch 4 und 6, **dadurch gekennzeichnet, dass** die Ermittlung des hydraulischen Widerstands (R) des Systems gemäß der Gleichung $$R = \frac{H_1}{Q_1 \cdot 2Q_0}$$ erfolgt, in der R der hydraulische Widerstand, $H_1$ die Amplitude der Förderhöhenschwankung ($\Delta H$), $Q_1$ die Amplitude der Förderstromschwankung ($\Delta Q$) und $Q_0$ der Gleichanteil des Förderstroms (Q) ist.

11. Verfahren nach einem der Ansprüche 6 bis 8 und einem der Ansprüche 9 oder 10, **dadurch gekennzeichnet, dass** die statische Förderhöhe ($H_{static}$) unter Verwendung der Gleichanteile ($H_0$, $Q_0$) der Förderhöhe (H) und des Förderstroms (Q) und des hydraulischen Widerstands des Systems ermittelt wird gemäß der Gleichung $H_{static}$ = $H_0 - R \cdot Q_0^2$ bestimmt wird, in der $H_{static}$ die statische Förderhöhe, $H_0$ der Gleichanteil der Förderhöhe (H), $Q_0$ der Gleichanteil des Förderstroms (Q) und R der hydraulische Widerstand des Systems ist.

**12.** Drehzahlregelbares Kreiselpumpenaggregat umfassend eine Kreiselpumpe, einen diese antreibenden Elektromotor und eine Pumpenelektronik zur Steuerung und/ oder Regelung des Elektromotors, **dadurch gekennzeichnet, dass** die Pumpenelektronik eingerichtet ist, das Verfahren nach einem der Ansprüche 1 bis 10 auszuführen.

**Claims**

**1.** Method for determining the static pumping head ($H_{static}$) of a speed-controlled centrifugal pump assembly operated in a working point (B) in an open hydraulic system, **characterised by** the pumping head (H) of the centrifugal pump assembly in the working point (B) being modulated to obtain a pumping head fluctuation ($\Delta H$) with an excitation frequency ($f_g$) that is so low that a flow rate fluctuation ($\Delta Q$) is caused, in which the pumping head fluctuation ($\Delta H$) and the flow rate fluctuation ($\Delta Q$) are used to determine modulation parameters ($H_0$, $Q_0$, $H_1$, $Q_1$) that are used to determine the static pumping head (Hstatic).

**2.** Method according to claim 1, **characterised by** the modulation of the pumping head (H) being effected by applying a setpoint value for the existing operating speed ($N_0$) in the working point (B) or the existing operating torque in the working point (B) with a periodic excitation signal ($F_g(t)$) of an excitation frequency ($f_g$).

**3.** Method according to claim 1 or 2, **characterised by** the excitation frequency ($f_g$) being less than 1 Hz, preferably between 0.5 Hz and 0.05 Hz, notably approx. 0.1 Hz.

**4.** Method according to one of the preceding claims, **characterised by** the static pumping head ($H_{static}$) being determined using an equation describing the system curve (1) of the hydraulic system, which specifies the pumping head (H) required for a certain flow rate (Q) and comprises a quadratic term, the coefficient of which specifies the hydraulic resistance (R) of the system.

**5.** Method according to claim 4, **characterised by** the equation only comprising the quadratic term and a flow rate independent term that specifies the static pumping head (Hstatic).

**6.** Method according to one of the preceding claims, **characterised by** the modulation parameters ($H_0$, $Q_0$, $H_1$, $Q_1$) being the direct component ($H_0$, $Q_0$) and the amplitude ($H_1$, $Q_1$) of the pumping head (H) and the flow rate (Q).

**7.** Method according to claim 6, **characterised by** the direct component ($H_0$) of the pumping head (H) being determined by integration of the pumping head (H) over at least one period and/or the direct component ($Q_0$) of the flow rate (Q) being determined by integration of the flow rate (Q) over at least one period.

**8.** Method at least according to claim 6 or 7, **characterised by** the amplitude ($H_1$) of the pumping head fluctuation ($\Delta H$) being determined by integration of the product of the pumping head (H) and a sine or cosine signal with the excitation frequency ($f_g$) over at least one period and/or the amplitude ($Q_1$) of the flow rate fluctuation ($\Delta Q$) being determined by integration of the product of the flow rate (H) and a sine or cosine signal with the excitation frequency ($f_g$) over at least one period.

**9.** Method at least according to claim 4 and 6, **characterised by** the hydraulic resistance (R) of the system in the working point (B) being determined using the amplitude ($H_1$, $Q_1$) of the pumping head fluctuation ($\Delta H$) and the flow rate fluctuation ($\Delta Q$) and the direct component ($Q_0$) of the flow rate (Q).

**10.** Method at least according to claim 4 and 6, **characterised by** the hydraulic resistance (R) of the system being determined using the equation $R = \dfrac{H_1}{Q_1 \cdot 2Q_0}$, where R is the hydraulic resistance, $H_1$ is the amplitude of the pumping head fluctuation ($\Delta H$), $Q_1$ is the amplitude of the flow rate fluctuation ($\Delta Q$) and $Q_0$ is the direct component of the flow rate (Q).

11. Method according to one of the claims 6 through 8 and one of the claims 9 or 10, **characterised by** the static pumping head ($H_{static}$) being determined using the direct components ($H_0$, $Q_0$) of the pumping head (H) and the flow rate (Q) and the hydraulic resistance of the system according to the equation $H_{static} = H_0 - R \cdot Q_0^2$, where $H_{static}$ is the static pumping head, $H_0$ is the direct component of the pumping head (H), $Q_0$ is the direct component of the flow rate (Q) and R is the hydraulic resistance of the system.

12. Speed-controllable centrifugal pump assembly comprising a centrifugal pump, an electric motor driving the same and pump electronics for the closed-loop and/or open-loop control of the electric motor, **characterised by** the pump electronics being configured to execute one of the claims 1 through 10.

**Revendications**

1. Procédé pour déterminer la hauteur de refoulement statique ($H_{static}$) d'un groupe motopompe centrifuge à à vitesse régulée fonctionnant à un point de fonctionnement (B) dans un système hydraulique ouvert, **caractérisé en ce que** la hauteur de refoulement (H) du groupe motopompe centrifuge au point de fonctionnement (B) est modulée avec une fréquence d'excitation ($f_g$) pour obtenir une variation de hauteur de refoulement ($\triangle H$), qui est si basse qu'elle provoque une fluctuation du débit ($\triangle Q$), sachant que des grandeurs de modulation ($H_0$, $Q_0$, $H_1$, $Q_1$) sont déterminées à partir de la fluctuation de la hauteur de refoulement ($\triangle H$) et de la fluctuation du débit ($\triangle Q$), en utilisant lesquelles on détermine la hauteur de refoulement statique ($H_{static}$).

2. Procédé selon la revendication 1, **caractérisé en ce que** la modulation de la hauteur de refoulement (H) est provoquée par l'application d'un signal d'excitation périodique ($F_g(t)$) d'une fréquence d'excitation ($f_g$) à une valeur nominale pour la vitesse de rotation de service ($N_0$) présente au point de fonctionnement (B) ou le couple de rotation de service présent au point de fonctionnement (B).

3. Procédé selon la revendication 1 ou 2, **caractérisé en ce que** la fréquence d'excitation ($f_g$) est inférieure à 1 Hz, de préférence comprise entre 0,5 Hz et 0,05 Hz, en particulier d'environ 0,1 Hz.

4. Procédé selon l'une des revendications précédentes, **caractérisé en ce que** la hauteur de refoulement statique ($H_{static}$) est déterminée à partir d'une équation décrivant la courbe d'installation (1) du système hydraulique, indiquant la hauteur de refoulement (H) nécessaire pour un débit (Q) donné et comprenant un terme quadratique dont le coefficient indique la résistance hydraulique (R) du système.

5. Procédé selon la revendication 4, **caractérisé en ce que** l'équation comprend uniquement le terme quadratique et un terme indépendant du débit indiquant la hauteur de refoulement statique ($H_{static}$).

6. Procédé selon l'une des revendications précédentes, **caractérisé en ce que** les grandeurs de modulation ($H_0$, $Q_0$, $H_1$, $Q_1$) sont la composante invariante ($H_0$, $Q_0$) et l'amplitude ($H_1$, $Q_1$) de la hauteur de refoulement (H) et du courant de refoulement (Q).

7. Procédé au moins selon la revendication 6, **caractérisé en ce que** la composante invariante ($H_0$) de la hauteur de refoulement (H) est déterminée par intégration de la hauteur de refoulement (H) sur au moins une période et/ou la composante invariante ($Q_0$) du courant de refoulement (Q) est déterminée par intégration du courant de refoulement (Q) sur au moins une période.

8. Procédé au moins selon la revendication 6 ou 7, **caractérisé en ce que** l'amplitude ($H_1$) de la variation de hauteur de refoulement ($\triangle H$) est déterminée par intégration du produit de la hauteur de refoulement (H) et d'un signal sinus ou cosinus avec la fréquence d'excitation ($f_g$) sur au moins une période et/ou l'amplitude ($Q_1$) de la variation de débit ($\triangle Q$) est déterminée par intégration du produit du débit (H) et d'un signal sinus ou cosinus avec la fréquence d'excitation ($f_g$) sur au moins une période.

9. Procédé au moins selon les revendications 4 et 6, **caractérisé en ce que** la résistance hydraulique (R) du système au point de fonctionnement (B) est déterminée en utilisant l'amplitude ($H_1$, $Q_1$) de la variation de hauteur de refoulement ($\triangle H$) et de la variation de débit ($\triangle Q$) et la composante invariante ($Q_0$) du débit (Q).

10. Procédé au moins selon les revendications 4 et 6, **caractérisé en ce que** la résistance hydraulique (R) du système est déterminée selon l'équation $R = \dfrac{H_1}{Q_1 \cdot 2Q_0}$ dans laquelle R est la résistance hydraulique, $H_1$ est l'amplitude de la variation de hauteur de refoulement ($\Delta H$), $Q_1$ est l'amplitude de la variation de débit ($\Delta Q$) et $Q_0$ est la composante invariante du débit (Q).

11. Procédé selon l'une des revendications 6 à 8 et l'une des revendications 9 ou 10, **caractérisé en ce que** la hauteur de refoulement statique ($H_{static}$) est déterminée en utilisant les composantes invariantes ($H_0$, $Q_0$) de la hauteur de refoulement (H) et du débit de refoulement (Q) et la résistance hydraulique du système selon l'équation $H_{static} = H_0 - R \cdot Q_0^2$ dans laquelle $H_{static}$ est la hauteur de refoulement statique, $H_0$ est la composante invariante de la hauteur de refoulement (H), $Q_0$ est la composante invariante du débit de refoulement (Q) et R est la résistance hydraulique du système.

12. Groupe motopompe centrifuge à vitesse de rotation variable comprenant une pompe centrifuge, un moteur électrique entraînant celle-ci et une électronique de pompe pour la commande et/ou la régulation du moteur électrique, **caractérisé en ce que** l'électronique de commande est configurée pour exécuter le procédé selon l'une des revendications 1 à 10.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014006828 A1
- EP 1072795 A1
- EP 2610693 B1
- US 2014136000 A1
- EP 2354556 A1
- EP 3123033 A1
- LU 501040